# EUROPÄISCHE PATENTSCHRIFT

(11) **EP 3 431 355 B1**
(45) Veröffentlichungstag und Bekanntmachung des Hinweises auf die Patenterteilung: **13.05.2020**
(21) Anmeldenummer: 18177912.5
(22) Anmeldetag: 15.06.2018
(51) Int. Cl.: B60W 40/09

(54) **VERFAHREN ZUR ERKENNUNG UND ZUR CHARAKTERISIERUNG EINES FAHRVERHALTENS EINES FAHRERS ODER EINES AUTOPILOTEN IN EINEM KRAFTFAHRZEUG, STEUEREINHEIT UND KRAFTFAHRZEUG**
METHOD FOR DETECTING AND CHARACTERISING A DRIVING BEHAVIOUR OF AN AUTOPILOT OR A DRIVER IN A MOTOR VEHICLE, CONTROL UNIT AND MOTOR VEHICLE
PROCÉDÉ DE DÉTECTION ET DE CARACTÉRISATION D'UN COMPORTEMENT ROUTIER D'UN CONDUCTEUR OU D'UN PILOTE AUTOMATIQUE DANS UN VÉHICULE AUTOMOBILE, UNITÉ DE COMMANDE ET VÉHICULE AUTOMOBILE

(30) Priorität: 19.07.2017 DE 102017212355
(43) Veröffentlichungstag der Anmeldung: 23.01.2019
(73) Patentinhaber: VOLKSWAGEN AKTIENGESELLSCHAFT, 38440 Wolfsburg (DE)
(72) Erfinder: Schacher, Samuel, 10629 Berlin (DE)

(56) Entgegenhaltungen:
- DE-T5-112011 105 616
- OUSSAMA DERBEL ET AL: "Driver behavior assessment based on the G-G diagram in the DVE system", IFAC-PAPERSONLINE, Bd. 49, Nr. 11, 1. Januar 2016 (2016-01-01), Seiten 89-94, XP055518021, ISSN: 2405-8963, DOI: 10.1016/j.ifacol.2016.08.014
- ROSOLINO VAIANA ET AL: "Driving Behavior and Traffic Safety: An Acceleration-Based Safety Evaluation Procedure for Smartphones", MODERN APPLIED SCIENCE, Bd. 8, Nr. 1, 12. Dezember 2013 (2013-12-12), XP055518026, ISSN: 1913-1844, DOI: 10.5539/mas.v8n1p88

## Beschreibung

Die Erfindung betrifft ein Verfahren zur Charakterisierung eines Fahrverhaltens eines Fahrers oder eines Autopiloten in einem Kraftfahrzeug, eine Steuereinheit und ein Kraftfahrzeug.

Neben der Überwachung einer Längs- und einer Querbeschleunigung eines Kraftfahrzeugs durch Fahrdynamikregler zur Erhöhung der Sicherheit ist es üblich, diese Werte für eine Auswertung zu protokollieren. So werden neuerdings zur Berechnung von Versicherungsprämien Komponenten (Kraftfahrzeugtracker) in Kraftfahrzeuge eingebaut, die die Fahrweise eines Fahrers u.a. auf Grundlage der Beschleunigungswerte zu bewerten. Die verwendeten Kennwerte basieren auf maximal auftretenden Verzögerungen, der Kraftfahrzeuggeschwindigkeit und weiteren "einfachen" Markern bzw. Kennwerten. Es hat sich jedoch gezeigt, dass diese Marker keine geeignete Grundlage zu Bewertung eines Fahrverhaltens sind. Sehr gute Autofahrer werden durch die benutzten Kennwerte unter Umständen deutlich schlechter eingestuft, als es ihrem Fahrkönnen und ihre Fahrerfahrung eigentlich gerecht werden würde, weil die Unterscheidung zwischen einem unerfahrenem und einem erfahrenem/guten Fahrer deutlich komplexer ist, als die Betrachtung vereinzelter Kennwerte.

Es gibt verschiedene Untersuchungen zur Fahrweise von menschlichen Fahrern mit dem Ziel der Adaption von Fahrerassistenzsystemen. Die Fahrer werden meistens auf Basis der gefahrenen Geschwindigkeit, der maximalen Querbeschleunigung und dem Abstand zum Vordermann in verschiedene Fahrertypen (defensiv, normal, sportlich, aggressiv) eingeteilt. Dabei werden auch sogenannte gg-Diagramme betrachtet. Ein gg-Diagramm umfasst eine Achse für die Querbeschleunigung und eine Achse für die Längsbeschleunigung. In einem gg-Diagramm werden Messpunkte, welche einen Querbeschleunigungswert und einen Längsbeschleunigungswert umfassen eingetragen, wobei diese oft als ein vielfaches der Erdbeschleunigung angegeben werden. In den nachgenannten Veröffentlichungen werden die Fahrertypen nach maximal auftretenden Beschleunigungen bewertet, die feineren Nuancen im gg-Diagramm werden nicht betrachtet. Die Bewertung der Fahrweise erfolgt aus diesem Grund oft grob und basiert auf uneindeutigen Kennwerten. Es fehlt die nuancierte Betrachtung der Fahrweise insbesondere bei der Kombination aus Lenkung und Bremse.

In dem Bericht "Modellbasierte Komfortbewegung von Fahrerassistenzsystemen" (Wegscheider,M. / Prokop,G. / Bayerische Motorenwerke, BMW, Muenchen, DE von Dokumentation Kraftfahrtwesen e.V.; 2005) wird eine Charakterisierung von Fahrertypen mittels einer Kartierung des von einem jeweiligen Fahrertyp genutzten Bereiches in einem gg-Diagramm beschrieben.

In der DE 10 2010 014 076 A1 wird ein Verfahren zur Adaption eines Fahrverhaltens eines Kraftfahrzeugs bei einem Fahrerwechsel beschrieben. Im Rahmen des Verfahrens ist es vorgesehen, fahrerspezifische Fahrparameter, die einen Fahrstil eines Fahrers kennzeichnen, als virtuelles Fahrerbild zu speichern.

In dem Artikel "Driver behavior assessment based on the G-G diagram in the DVE system" von Oussama Derbel et al ist ein Verfahren zur Erkennung und zur Charakterisierung eines Fahrverhaltens eines Fahrers oder eines Autopiloten in einem Kraftfahrzeug offenbart.

In dem Artikel "Driving Behavior and Traffic Safety: An Acceleration-Based Safety Evaluation Procedure for Smartphones" von Rosolino Vaiana et al ist ein Verfahren zur Identifikation eines Fahrverhaltens mittels eines GG Diagramms offenbart.

In der DE 2011 105 616 T5 ist ein Fahrzeugsteuerungssystem offenbart, das dazu eingerichtet, einen Index, welcher einen Fahrzustand eines Fahrzeuges und eine Fahrvorliebe eines Fahrers repräsentiert, auf Grundlage einer Beschleunigung des Fahrzeuges zu schätzen und Fahrcharakteristika des Fahrzeuges auf Grundlage des Index einzustellen.

Der Erfindung liegt die Aufgabe zu Grunde, ein Verfahren zur Verfügung zu stellen, welches es ermöglicht, dass Fahrverhalten eines Fahrers nach objektiven Kriterien zu charakterisieren.

Die Aufgabe wird durch die Gegenstände der unabhängigen Patentansprüche gelöst. Vorteilhafte Weiterbildungen der Erfindung sind durch die Merkmale der abhängigen Patentansprüche gegeben.

Erfindungsgemäß ist ein Verfahren zur Erkennung und zur Charakterisierung eines Fahrverhaltens bereitgestellt.

Das Verfahren ist zum Lösen der obigen Aufgabe erfindungsgemäß wie folgt gestaltet. Durch zumindest einen Beschleunigungssensor werden Messpunkte, welche eine Querbeschleunigung und eine Längsbeschleunigung eines Kraftfahrzeugs angeben, über einen Zeitraum erfasst. Durch eine Steuereinheit wird aus den Messpunkten zumindest eines Teilabschnitts des Zeitraums ein als gg-Diagramm gestalteter Bildraum erzeugt. Der Bildraum wird in einem nächsten Schritt durch die Steuereinheit mittels einer Transformation in einen Parameterraum transformiert. Der Parameterraum ist ein Dualraum des Bildraums und kann beispielsweise ein Hough-Raum sein. In dem Parameterraum werden Koordinaten von Häufungspunkten von der Steuereinheit erfasst. Ein Häufungspunkt ist ein Punkt oder ein Bereich, welcher ein lokales oder globales Maximum aufweist. Aus den Koordinaten der Häufungspunkte wird durch die Steuereinheit mittels eines Klassifikationsalgorithmus ein Klassifikationswert und/oder ein Klassifikationsprofil betreffend das Fahrverhalten bestimmt. Mit anderen Worten werden die Werte der Querbeschleunigung und der Längsbeschleunigung eines Kraftfahrzeugs über einen Zeitraum, wobei es sich beispielsweise um einen Zeitraum einer Fahrt handeln kann, durch einen Sensor gemessen. Zumindest ein Teil der gemessenen Messpunkte werden in einem gg-Diagramm dargestellt. Die Messpunkte können eine Kurve im gg-Diagramm bilden oder beschreiben. Die Darstellung der Messpunkte wird durch die Transformation derart geändert, dass ihre Koordinaten nicht durch die Werte ihrer jeweiligen Querbeschleunigung und Längsbeschleunigung definiert sind, sondern durch vorbestimmte Parameter. Die Verteilung der Messpunkte kann bei der Darstellung durch die vorbestimmten Parameter uneinheitlich sein. Bereiche oder Stellen mit einer vorbestimmten Mindestdichte an Messpunkten werden durch die Steuereinheit als Häufungspunkte erfasst. Aus den Koordinaten dieser Bereiche und/oder Punkte berechnet die Steuereinheit einen Wert und/oder ein Profil, welche das Fahrverhalten des Fahrers oder des Autopiloten in einem Kraftfahrzeug einstufen.

Zum Beispiel kann ein Beschleunigungssensor in bestimmten Zeitabständen oder Streckenabständen über einen Zeitraum jeweils eine Querbeschleunigung und eine Längsbeschleunigung des Kraftfahrzeugs als jeweiligen Messpunkt erfassen. Hierdurch ergibt sich ein Messpunktepaar. Eine Steuereinheit, welche einen Mikrocontroller und/oder einen Mikroprozessor umfassen kann, kann diese Messpunktepaare zumindest eines Teilabschnitts des Zeitraums als gg-Diagramm darstellen Die Werte des jeweiligen Messpunktepaares werden als Koordinaten interpretiert und als Punkt in dem gg-diagramm eingetragen. Dieses gg-Diagramm kann durch die Steuereinheit mittels einer Transformation von einem Bildraum in einen Parameterraum transformiert werden. In dem Parameterraum können Häufungspunkte auftreten. Diese Häufungspunkte können durch die Steuereinheit erkannt, und deren Koordinaten erfasst werden. Aus den Koordinaten der Häufungspunkte können mittels eines Klassifikationsalgorithmus ein Klassifikationswert und/oder ein Klassifikationsprofil durch die Steuereinheit berechnet werden.

Durch die Erfindung ergibt sich der Vorteil, dass die Charakterisierung eines Fahrers nicht auf Grundlage einzelner Werte erfolgt, sondern auf Grundlage von Mustern des Fahrverhaltens.

Eine Weiterbildung der Erfindung sieht vor, dass die Koordinaten des Parameterraums Parameter einer Geraden sind. Mit anderen Worten sind die Achsen des Parameterraums Variablen zugeordnet, durch welche eine Gerade beschrieben werden kann. Bei einem der Parameter kann es sich beispielsweise um einen Winkel einer Geraden zu einer Achse oder einen Winkel einer Normalen der Geraden zu einer Achse handeln. Bei einem anderen Parameter kann es sich beispielsweise um einen Abstand eines Lotfußpunktes auf der Geraden zu einem Ursprung handeln. Dadurch ergibt sich der Vorteil, dass Geraden im Bildraum Häufungspunkte im Parameterraum bilden, welche durch die Steuereinheit erfasst werden können. Die Erkennung von Geraden im gg-Diagramm ist vorteilhaft, weil sich anhand der Richtung einer Geraden, der Zusammenhang zwischen der Längsbeschleunigung und der Querbeschleunigung beschreiben lässt.

Eine Weiterbildung sieht vor, dass die Koordinaten des Parameterraums Koordinaten eines Kreismittelpunktes und einen Kreisradius umfassen. Mit anderen Worten sind die Achsen des Parameterraums Koordinaten eines Kreismittelpunktes im Bildraum und einem Kreisradius zugeordnet. Dadurch ergibt sich der Vorteil, dass Kreisstrukturen im Verlauf des gg-Diagramm erfasst werden können. Die Erkennung von Kreisen im gg-Diagramm ist vorteilhaft, weil sich aus Kreisstrukturen im Bildraum Rückschlüsse auf das Fahrverhalten schließen lassen. So weist der Verlauf des gg-Diagramm bei einem optimalen Befahren einer Kurve, Kreismuster mit einem großen Radius auf.

Eine Weiterbildung sieht vor dass die Transformation eine Hough-Transformation ist. Mit anderen Worten wird der Bildraum mittels einer Hough-Transformation in einen Parameterraum transformiert. Dabei kann es sich beispielsweise um die ursprüngliche Hough-Transformation, die Kreis-Hough-Transformation, die generalisierte Hough-Transformation oder eine andere Anpassung der ursprünglichen Hough-Transformation handeln. Dadurch ergibt sich der Vorteil, dass sich Muster im Verlauf des gg-Diagramm erkennen lassen.

Eine Weiterbildung sieht vor, dass die Werte der Querbeschleunigung und die Werte der Längsbeschleunigung zumindest eines Teilabschnitts des Zeitraums durch die Steuereinheit geglättet und/oder gefiltert werden. Mit anderen Worten bereitet die Steuereinheit die Werte der Querbeschleunigung und die Werte der Längsbeschleunigung so auf, dass Oszillationen und Ausreißer aus der Kurve im gg-Diagramm entfernt werden. Es kann beispielsweise sein, dass die Werte der Art angepasst werden, dass der Kurvenverlauf im gg-Diagramm geglättet und/oder ein Rauschen gemindert wird. Dadurch ergibt sich der Vorteil, dass kleine Schwankungen ausgeglichen werden, wodurch die Detektion von Mustern vereinfacht wird.

Eine Weiterbildung sieht vor, dass der Klassifikationswert und/oder das Klassifikationsprofil an ein Fahrassistenzsystem und/oder einen externen Zentralrechner übermittelt werden. Es kann beispielsweise sein, dass der Klassifikationswert und oder das Klassifikationsprofil an ein Fahrassistenzsystem übermittelt werden, um ein als gefährlich klassifiziertes Fahrverhalten mittels eines Eingreifens durch das Fahrassistenzsystem auszugleichen. Dadurch ergibt sich der Vorteil, dass eine Weiterverarbeitung des berechneten Qualifikationswertes und oder des Qualifikationsprofils ermöglicht wird.

Eine Weiterbildung der Erfindung sieht vor, dass der zumindest eine Teilabschnitt des Zeitraums durch die Steuereinheit in Abhängigkeit von vorbestimmten geographischen Daten und/oder Werten der Querbeschleunigung und/oder der Längsbeschleunigung bestimmt wird. Mit anderen Worten wird die Wahl des Teilabschnitts des Zeitraums durch die Steuereinheit auf Grundlage von vorbestimmten geographischen Daten und/oder Werten der Querbeschleunigung und/oder der Längsbeschleunigung bestimmt. Bei vorbestimmten geographischen Daten kann es sich beispielsweise um Kurven und oder Kreuzungen handeln. Bei vorbestimmten Werten der quer und oder der Längsbeschleunigung kann es sich beispielsweise um Werte Kombination handeln, welche auf eine Kurve hindeuten. Dadurch ergibt sich der Vorteil, dass es nicht erforderlich ist, den Kurvenverlauf im gg-Diagramm über den gesamten Zeitraum auszuwerten, sondern dass gezielt Teilabschnitte ausgewählt werden können, welche für die Charakterisierung eines Fahrverhaltens besonders geeignet sind. Dabei kann es sich insbesondere um Kurven handeln.

Eine Weiterbildung sieht vor, dass der Klassifikationsalgorithmus eines Supportvektormaschinen und/oder ein neuronales Netz umfasst. Mit anderen Worten werden eines Supportvektormaschinen und oder einer neuronales Netz bei der Klassifikation des Fahrverhaltens verwendet. Dadurch ergibt sich der Vorteil, dass komplex auftretende Muster im Parameterraum erfasst werden können.

Zu der Erfindung gehört auch die Steuereinheit für das Kraftfahrzeug. Die Steuereinheit weist eine Prozessoreinrichtung auf, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Zu der Erfindung gehört auch ein Kraftfahrzeug, welches eine Steuereinheit zur Durchführung eines erfindungsgemäßen Verfahrens umfasst.

Im Folgenden ist ein Ausführungsbeispiel der Erfindung beschrieben. Hierzu zeigt:
- Fig. 1: einen schematischer Verlauf einer Ausführungsform des erfindungsgemäßen Verfahrens;
- Fig. 2: ein gg-Diagramm eines Fahrmanövers, wie es gemäß dem Verfahren zugrunde gelegt werden kann;
- Fig. 3: mögliche Bildräume und Parameterräume wie sie sich gemäß dem Verfahren ergeben können;
- Fig. 4: mögliche weitere Bildräume und Parameterräume; und
- Fig. 5: gemäß dem Verfahren erfasste Kreismuster im gg-Diagramm.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

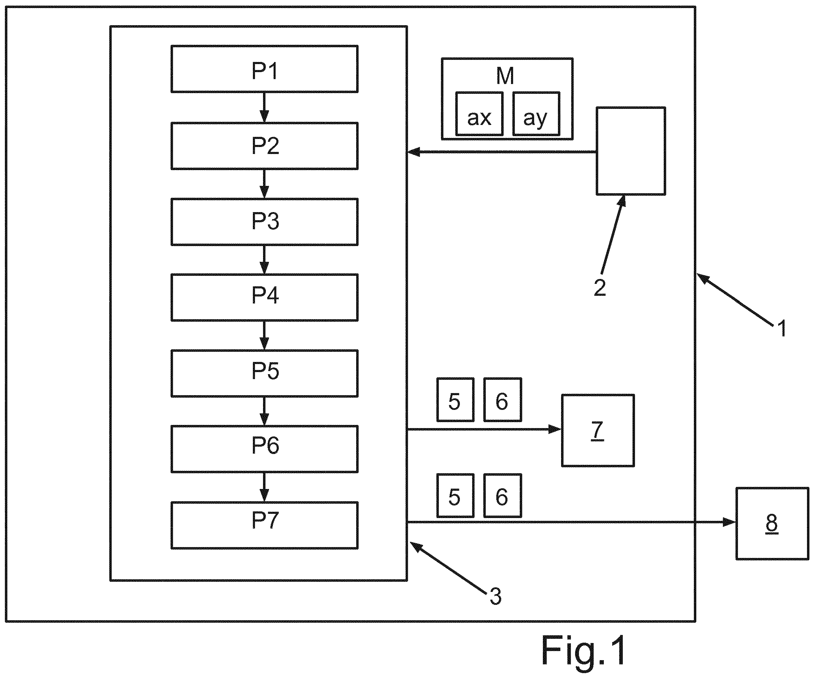

Fig. 1 zeigt einen schematischer Verlauf eines erfindungsgemäßen Verfahrens zur Erkennung und zur Charakterisierung eines Fahrverhaltens eines Fahrers oder eines Autopiloten in einem Kraftfahrzeug. In einem ersten Schritt P1 können eine Querbeschleunigung ay und eine Längsbeschleunigung ax eines Kraftfahrzeugs 1 über einen Zeitraum T durch einen Beschleunigungssensor 2 in Messpunkten M erfasst werden. Der Zeitraum kann eine Betriebszeit des Kraftfahrzeugs 1 sein. Der Beschleunigungssensor 2 kann beispielsweise eine Komponente einer Vorrichtung zur Fahrdynamikregelung sein. Die Werte der Querbeschleunigung ay und die Werte der Längsbeschleunigung ay übereinstimmender Zeitpunkte, welche zumindest innerhalb eines Teilabschnitts T1 des Zeitraums T erfasst werden, können durch eine Steuereinheit 3 verarbeitet werden (P2). Die Steuereinheit 3 kann beispielsweise einen Mikrocontroller oder einen Mikroprozessor umfassen. Die Werte der Längsbeschleunigung ax und/oder der Querbeschleunigung ay können von der Steuereinheit 3 aufbereitet werden. So können die Werte ax,ay gefiltert und/oder geglättet werden. Die Steuereinheit 3 kann einen als gg-Diagramm gestalteten Bildraum l aus den Werten erzeugen (P3). Ein gg-Diagramm kann als Kammscher Kreis gestaltet sein. Eine Achse des gg-Diagramms kann der Längsbeschleunigung ax zugeordnet sein und eine andere Achse der Querbeschleunigung ay. Es kann sein, dass das gg-Diagramm lediglich Messpunkte M eines Teilabschnitts T1 des Zeitraums umfasst. Der Teilabschnitt des Zeitraums T1 kann durch die Steuereinheit 3 beispielsweise in Abhängigkeit von vorbestimmten geographischen Daten und/oder Werten der Querbeschleunigung ay und/oder Werten der Längsbeschleunigung ax bestimmt wird. So kann es beispielsweise sein, dass der Teilabschnitt T1 einen Zeitraum beschreibt, in welchem das Kraftfahrzeug 1 entlang einer Kurve fährt. Der Bildraum l kann durch die Steuereinheit 3 mittels einer Transformation in einen Parameterraum P transformiert werden (P4). Bei der Transformation kann es sich beispielsweise um eine Transformation handeln, welche im Rahmen eines digitalen Bildverarbeitungs-und oder Mustererkennungsverfahrens angewandt wird. Dabei kann es sich insbesondere um eine Hough-Transformation oder eine Radon-Transformation handeln. Der Parameterraum P kann beispielsweise der Art gestaltet sein, dass die Koordinaten des Parameterraums P, Parameter einer Geraden sind. So kann es beispielsweise sein, dass eine Achse einem bestimmten Winkel θ zugeordnet ist und eine weitere Achse einem Abstand ρ zu einem bestimmten Punkt. Es kann auch sein, dass die Parameter des Parameterraums P Koordinaten eines Kreismittelpunktes und ein Kreisradius sind. Es kann sein, dass im Parameterraum P Häufungspunkte D sind, welche einer Geraden und/oder einem Kreis im Bildraum zuzuordnen sind. Es kann sein, dass diese Häufungspunkte D von der Steuereinheit 3 erfasst werden (P5). Dies kann beispielsweise mittels einer Erfassung von Maxima erfolgen. Die Steuereinheit 3 kann aus den Koordinaten der Häufungspunkte D mittels eines Klassifikationsalgorithmus 4, einen Klassifikationswert 5 und/oder ein Klassifikationsprofil 6 berechnet (P6). Mit anderen Worten kann dies bedeuten, dass ein Klassifikationswert 5 und/oder ein Klassifikationsprofil 6 beispielsweise aufgrund von Kreis- und/oder Geradenmustern im Bildraum l berechnet werden können. Ein Klassifikationswert 5 kann beispielsweise ein skalarer Wert sein, welcher aus den Koordinaten der Häufungspunkte D berechnet werden kann. Der Klassifikationswert 5 kann einem Fahrverhalten eines Fahrers und/oder eines Kraftfahrzeugs 1 zugeordnet sein. Ein Klassifikationsprofil 6 kann beispielsweise mehrere Klassifikationswerte 5, und/oder Maximalwerte der Längsbeschleunigung ax und/oder der Querbeschleunigung ay umfassen. Es kann sein, dass der Klassifikationswert 5 und/oder das Klassifikationsprofil 6 einem jeweiligen Fahrer zugeordnet sind. Es kann sein, dass der Klassifikationsalgorithmus 4 eine Support Vector Machine und/oder ein neuronales Netz umfasst. Es kann sein, dass der Klassifikationswert 5 und/oder das Klassifikationsprofil 6 an ein Fahrassistenzsystem 7 und/oder einen externen Zentralrechner 8 übermittelt werden (P7). Bei dem Fahrassistenzsystem 7 kann es sich beispielsweise Fahrdynamikregelvorrichtung handeln. Bei dem externen Zentralrechner 8 kann es sich beispielsweise um einen Zentralrechner des Kraftfahrzeugherstellers handeln.

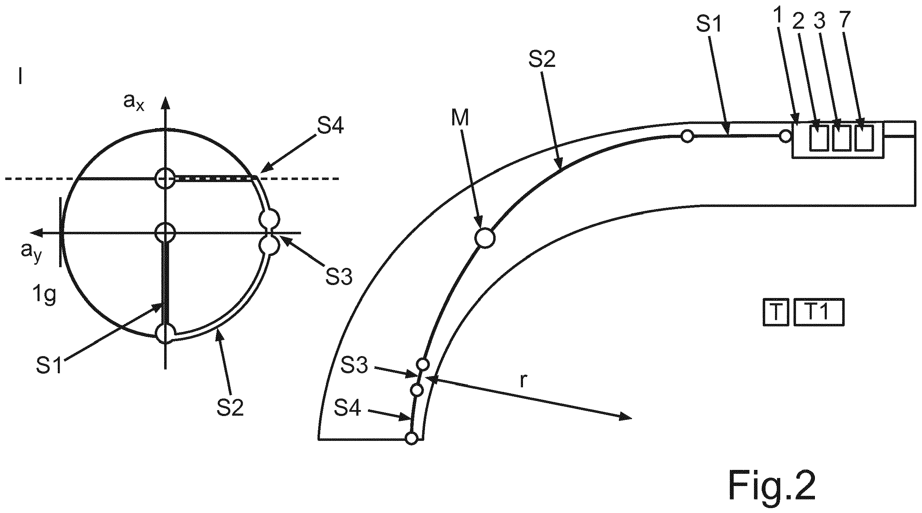

Fig. 2 zeigt ein mögliches gg-Diagramm als Bildraum l eines Fahrmanövers. Es kann sein, dass ein Kraftfahrzeug 1, welches einen Beschleunigungssensor 2 und eine Steuereinheit 3 umfasst, entlang einer Kurve fährt. Es kann sein, dass die Bahn des Kraftfahrzeugs 1 in vier Teilstücke S1,S2,S3,S4 unterteilt werden kann. Es kann sein, dass das Kraftfahrzeug 1 in dem ersten Teilstück S1 vor der Kurve abbremst, ohne seine Fahrtrichtung zu ändern. Mit anderen Worten kann es sein, dass die Längsbeschleunigung ax einen negativen Wert aufweist und die Querbeschleunigung ay null beträgt. Es kann sein, dass das Kraftfahrzeug 1 den Betrag des Abbremsens entlang eines zweiten Teilstücks S2 reduziert und zeitgleich lenkt. Mit anderen Worten kann es sein, dass der Betrag der Längsbeschleunigung ax entlang des zweiten Teilstücks S2 abnimmt und der Betrag der Querbeschleunigung ay entlang des zweiten Teilstücks S2 zunimmt. Es kann sein, dass der Betrag der Längsbeschleunigung ax in einem dritten Teilstück S3 minimal ist und der Betrag der Querbeschleunigung ay ein Maximum aufweist. Es kann sein, dass die Kurve in dem dritten Teilstück S3 einen minimalen Radius r des Manövers aufweist. Es kann sein, dass entlang eines vierten Teilstücks S4 die Querbeschleunigung ay reduziert wird und gleichzeitig die Längsbeschleunigung ax erhöht wird, sodass das Kraftfahrzeug 1 am Ende der Kurve wieder gerade fährt und beschleunigt.

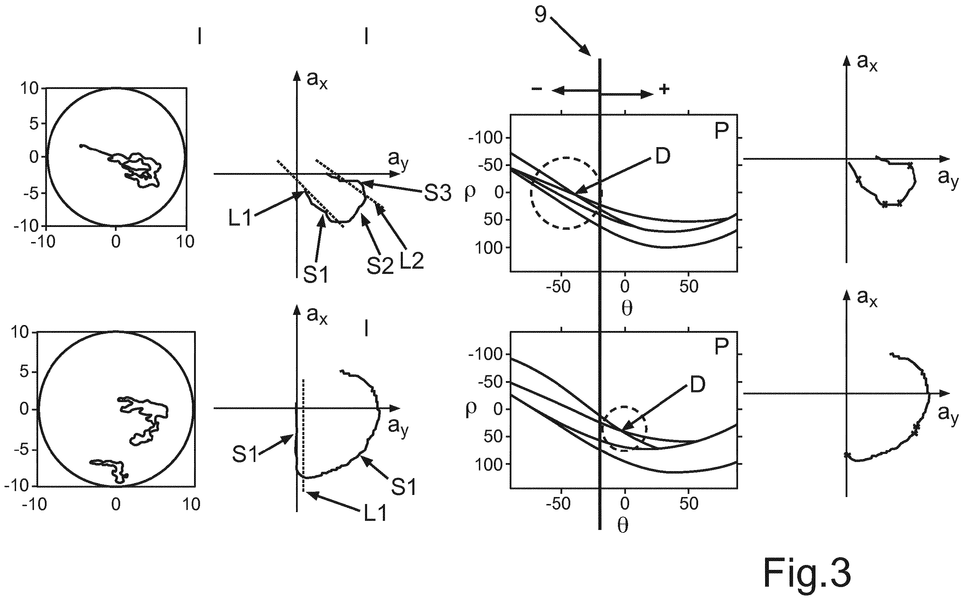

Fig. 3 zeigt mögliche Bildräume und Parameterräume jeweiliger Manöver durch eine Kurve. Es kann sein, dass für ein Kraftfahrzeug 1 Längsbeschleunigungen ax und Querbeschleunigungen ay entlang einer Kurve erfasst und in einem Bildraum l dargestellt werden, welche in der ersten Spalte dargestellt sind. Es kann sein, dass die Messwerte M aufbereitet werden. Es kann sein, dass ein Bildraum l mit aufbereiteten Werten in einen Parameterraum P transformiert wird. Es kann sein, dass das Kraftfahrzeug 1 in einer Kurve gleichzeitig lenkt und bremst. Mit anderen Worten kann es sein, dass über ein Teilstück S1 zu Beginn der Kurve sowohl der Betrag der Längsbeschleunigung ax, als auch der Betrag der Querbeschleunigung ay zunehmen. Dadurch kann es sein, dass der Verlauf eines ersten Teilstücks S1 entlang einer Geraden L1 verläuft, deren Normale einen Winkel θ von ca. -50° zur Abszisse aufweisen kann. Es kann sein, dass in einem zweiten Teilstück S2 der Betrag der Längsbeschleunigung ax abnimmt und gleichzeitig der Betrag der Querbeschleunigung ay zunimmt. Es kann sein, dass in einem dritten Teilstück S3 sowohl der Betrag der Längsbeschleunigung ax , als auch der Betrag der Querbeschleunigung ay abnimmt. Es kann sein, dass der Verlauf des dritten Teilstücks S3 zu einem Häufungspunkt D im Parameterraum führt, welcher eine Gerade L2, deren Normale einen Winkel θ von -50° zur Abszisse aufweist. Es kann sein, dass der Parameterraum P ein Hough-Raum ist. Es kann sein, dass der Parameter ρ einen Abstand der Geraden zum Ursprung beschreibt und der Winkel θ den Winkel zwischen der Normalen der Geraden und der ay-Achse. Es kann sein, dass die Normale der Geraden mittels der hesseschen Normalform berechnet wurde. Es kann sein, das der Verlauf in mehrere Geraden Li unterteilt werden kann.

Es kann sein, dass ein eine zweite Kurve ein Befahren einer Kurve durch ein Kraftfahrzeug 1 beschreibt, wobei in einem ersten Teilstück S1 der Betrag der Längsbeschleunigung ax zunimmt und die Querbeschleunigung ay einen vernachlässigbaren Wert aufweist. Es kann sein, dass ein restliches Teilstück S2 entlang eines Kreissegments verläuft. Es kann ein, dass der zugehörige Parameterraum einen Häufungspunkt D aufweist, welcher aufgrund des Verlaufs des ersten Teilstücks entlang einer Geraden L1, welche einen Winkel von 0 Grad aufweist, entsteht. Es kann sein, dass weitere Kanten bzw. Geraden als Häufungspunkte D im Parameterraum P erfasst werden können. Es kann sein, dass ein Klassifikationswert 5 und oder ein Klassifikationsprofil 6 in Abhängigkeit von der Lage der Häufungspunkte D berechnet werden. Es kann sein, dass beispielsweise der Klassifikationswert 5 abhängig ist von dem Winkel θ, unter welchem ein Häufungspunkt D auftritt. Es kann sein, dass ein Fahrverhalten als positiv (in Fig. 3 mit + symbolisiert) bewertet wird, wenn der Winkel θ zumindest eines Häufungspunktes D im Parameterraum P größer ist, als ein vorbestimmter Schwellenwert 9 und ein Fahrverhalten als negativ (in Fig. 3 mit - symbolisiert) bewertet wird, wenn der Winkel θ zumindest eines Häufungspunktes D kleiner ist als ein vorbestimmter Wert. Dies hängt damit zusammen, dass insbesondere ein gleichzeitiges Abbremsen und Lenken eines Kraftfahrzeugs 1 als besonders unangenehm von Insassen empfunden wird.

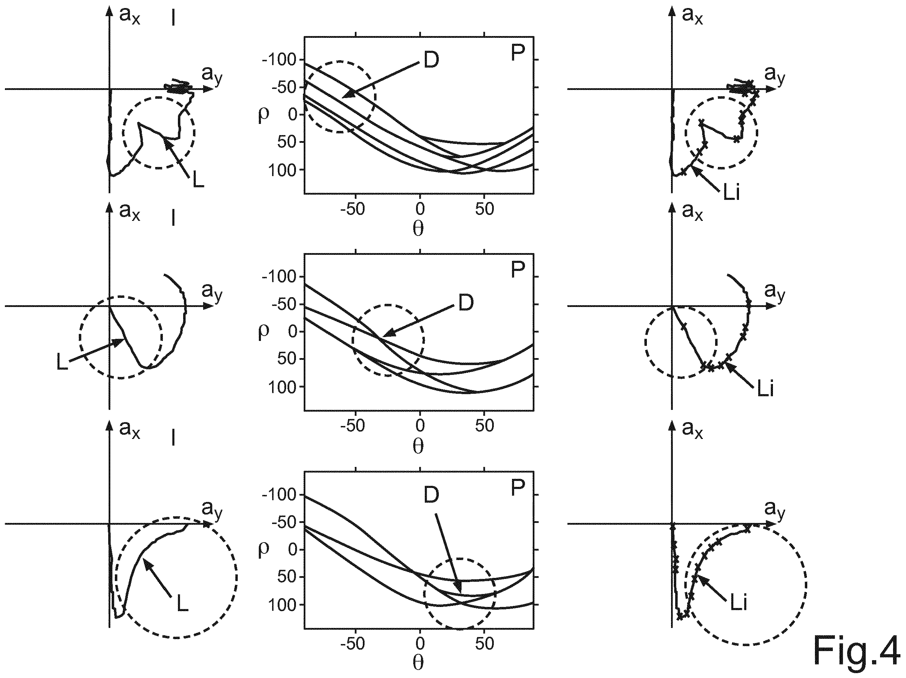

Fig. 4 zeigt mögliche Bildräume l und Parameterräume P verschiedener Kurven. In der ersten Spalte ist der Verlauf der Beschleunigung ax, ay im gg-Diagramm l dargestellt. Ein Kreis kennzeichnet eine Gerade L, welche als Häufungspunkt D im Parameterraum P erscheint. Der zugehörige Häufungspunkt D im Parameterraum P ist ebenfalls mit einem Kreis gekennzeichnet. Es kann sein, dass mittels einer Erfassung der Häufungspunkte D im Parameterraum P, der Verlauf im gg-Diagramm l in einzelne Geraden Li zerlegt werden kann.

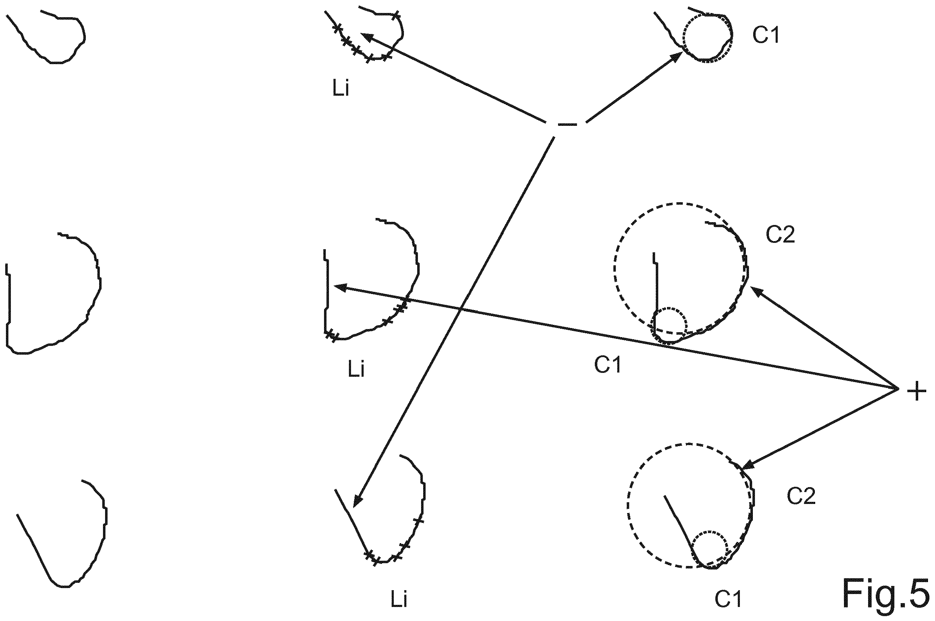

Fig. 5 zeigt mögliche Verläufe der Beschleunigung im gg-Diagramm . Die linke Spalte zeigt die aufbereiteten Verläufe vor einer Auswertung, die mittlere Spalte zeigt erkannte Geraden Li in den Verläufen und die rechte Spalte zeigt erkannte Kreisstrukturen C1,C2 in den Verläufen. Die Kreise können beispielsweise mittels einer Erfassung von Häufungspunkten D in einem Parameterraum P erkannt werden, welcher aus den Koordinaten der Kreismittelpunkte und der Radien gebildet ist. Es kann sein, dass beispielsweise zwei Kreisstrukturen C1,C2 in den Mustern erkannt werden. Es kann sein, dass der Klassifikationswert 5 und oder das Klassifikationsprofil 6 abhängig sind von den Koordinaten eines Kreismittelpunktes und oder dem Radius eines Kreises. Diese Abhängigkeit kann eingestellt worden sein, weil Untersuchungen gezeigt haben, dass entsprechende Strukturen im gg-Diagramm mit einem optimalen bzw. als angenehm empfunden Fahrverhalten verbunden sind. Es kann sein, dass die Klassifikation mittels einer Support Vector Machine, eines linearen Regressionsverfahrens, K-Means und/oder eines Convolutional Neural Networks erfolgt.

Anhand des Klassifikationswertes 5 und/oder des Klassifikationsprofils 6 kann beispielsweise ein Fahrassistenzsystem 7 des Kraftfahrzeugs 1 eine Gangschaltung derart ansteuern, dass die Wahl des Gangs für das Fahrverhalten des Fahrers oder des Autopiloten optimiert ist.

Insgesamt zeigt das Beispiel, wie durch die Erfindung ein Verfahren bereitgestellt wird, welches mittels einer Erkennung von Mustern in der Fahrweise bessere Indikatoren liefert als absolut und Maximalwerte.

### Bezugszeichenliste

- P1-P7: Schritte des Verfahrens
- S1-S4: Teilstücke einer Kurve
- 1: Kraftfahrzeug
- 2: Sensoreinheit
- 3: Steuereinheit
- 4: Klassifikationsalgorithmus
- 5: Klassifikationswert
- 6: Klassifikationsprofil
- 7: Fahrassistenzsystem
- 8: Zentralrechner
- 9: Schwellenwert
- L1, L2, Li: Geraden
- C1, C2: Kreisstrukturen
- D: Häufungspunkte
- T: Zeitraum
- T1: Teilraum
- M: Messpunkt
- ax: Längsbeschleunigung
- ay: Querbeschleunigung
- r: Kurvenradius
- l: Bildraum
- P: Parameterraum

## Patentansprüche

1. Verfahren zur Erkennung und zur Charakterisierung eines Fahrverhaltens eines Fahrers oder eines Autopiloten in einem Kraftfahrzeug, wobei
a. durch zumindest einen Beschleunigungssensor (2) Messpunkte, welche eine Querbeschleunigung (ay) und eine Längsbeschleunigung (ax) des Kraftfahrzeugs (1) angeben, über einen Zeitraum (T) erfasst werden,
b. durch eine Steuereinheit (3) aus den Messpunkten (M) zumindest eines Teilabschnitts (T1) des Zeitraums (T) ein als gg-Diagramm gestalteter Bildraum (I) erzeugt wird,
c. der Bildraum durch die Steuereinheit (3) mittels einer Transformation in einen Parameterraum (P) transformiert wird, **dadurch gekennzeichnet, dass**
d. Koordinaten von Häufungspunkten (D) in dem Parameterraum (P) von der Steuereinheit (3) erfasst werden, und dass
e. durch die Steuereinheit (3) aus den Koordinaten der Häufungspunkte (D) mittels eines Klassifikationsalgorithmus (4) ein Klassifikationswert (5) und/oder ein Klassifikationsprofil (6) betreffend das Fahrverhalten bestimmt werden.

2. Verfahren nach Anspruch 1, **dadurch gekennzeichnet, dass** die Koordinaten des Parameterraums (P) Parameter einer Geraden sind.

3. Verfahren nach Anspruch 1, **dadurch gekennzeichnet, dass** die Koordinaten des Parameterraums (P) Koordinaten eines Kreismittelpunktes und eines Kreisradius sind.

4. Verfahren nach einem der vorhergehenden Ansprüche, **dadurch gekennzeichnet, dass** die Transformation eine Hough-Transformation ist.

5. Verfahren nach einem der vorhergehenden Ansprüche, **dadurch gekennzeichnet, dass** die Werte der Querbeschleunigung (ay) und die Werte der Längsbeschleunigung (ax) zumindest eines Teilabschnitts (T1) des Zeitraums (T) durch die Steuereinheit (3) geglättet und/oder gefiltert werden.

6. Verfahren nach einem der vorhergehenden Ansprüche, **dadurch gekennzeichnet, dass** der Klassifikationswert (5) und/oder das Klassifikationsprofil (6) an ein Fahrassistenzsystem (7) und/oder einen externen Zentralrechner (8) übermittelt werden.

7. Verfahren nach einem der vorhergehenden Ansprüche, **dadurch gekennzeichnet, dass** der zumindest eine Teilabschnitt (T1) des Zeitraums (T) durch die Steuereinheit (3) in Abhängigkeit von vorbestimmten geografischen Daten und/oder Werten der Querbeschleunigung (ay) und/oder Längsbeschleunigung (ax) bestimmt wird.

8. Verfahren nach einem der vorhergehenden Ansprüche, **dadurch gekennzeichnet, dass** der Klassifikationsalgorithmus (4) eine Support Vector Machine und/oder ein neuronales Netz umfasst.

9. Steuereinheit (3), die eine Prozessoreinrichtung aufweist, die dazu eingerichtet ist eines der vorhergehenden Verfahren durchzuführen.

10. Kraftfahrzeug (1) mit einer Steuereinheit (3) nach Anspruch 9.

## Claims

1. Method for detecting and for characterizing a driving behaviour of a driver or of an autopilot in a motor vehicle, wherein
a. measuring points which specify a lateral acceleration (ay) and a longitudinal acceleration (ax) of the motor vehicle (1) are acquired over a time period (T) by at least one acceleration sensor (2),
b. an image space (I) which is configured as a gg diagram is generated by a control unit (3) from the measuring points (M) of at least part (T1) of the time period (T),
c. the image space is transformed into a parameter space (P) by the control unit (3) by means of a transformation, **characterized in that**
d. coordinates of cluster points (D) in the parameter space (P) are acquired by the control unit (3),
and **in that**
e. a classification value (5) and/or a classification profile (6) relating to the driving behaviour are/is determined by the control unit (3) from the coordinates of the cluster points (D) by means of a classification algorithm (4).

2. Method according to Claim 1, **characterized in that** the coordinates of the parameter space (P) are parameters of a straight line.

3. Method according to Claim 1, **characterized in that** the coordinates of the parameter space (P) are coordinates of a centre of a circle and of a radius of a circle.

4. Method according to one of the preceding claims, **characterized in that** the transformation is a Hough transformation.

5. Method according to one of the preceding claims, **characterized in that** the values of the lateral acceleration (ay) and the values of the longitudinal acceleration (ax) of at least part (T1) of the time period (T) are smoothed and/or filtered by the control unit (3).

6. Method according to one of the preceding claims, **characterized in that** the classification value (5) and/or the classification profile (6) are transferred to a driver assistance system (7) and/or to an external central computer (8).

7. Method according to one of the preceding claims, **characterized in that** the at least one part (T1) of the time period (T) is determined by the control unit (3) as a function of predetermined geographic data and/or values of the lateral acceleration (ay) and/or longitudinal acceleration (ax).

8. Method according to one of the preceding claims, **characterized in that** the classification algorithm (4) comprises a support vector machine and/or a neural network.

9. Control unit (3) which has a processor device which is designed to carry out one of the preceding methods.

10. Motor vehicle (1) having a control unit (3) according to Claim 9.

## Revendications

1. Procédé de détection et de caractérisation d'un comportement routier d'un conducteur ou d'un pilote automatique dans un véhicule automobile, dans lequel
a. des points de mesure qui indiquent une accélération transversale (ay) et une accélération longitudinale (ax) du véhicule automobile (1) sont détectés par au moins un capteur d'accélération (2) au cours d'une période de temps (T),
b. un espace image (1) est généré sous la forme d'un diagramme gg par une unité de commande (3) à partir des points de mesure (M) d'au moins une section partielle (T1) de la période de temps (T),
c. l'espace image est transformé par l'unité de commande (3) en un espace des paramètres (P) au moyen d'une transformation, **caractérisé en ce que**
d. des coordonnées de points de regroupement (D) dans l'espace des paramètres (P) sont détectées par l'unité de commande (3), et **en ce que**
e. une valeur de classification (5) et/ou un profil de classification (6) concernant le comportement routier est déterminé par l'unité de commande (3) à partir des coordonnées des points de regroupement (D) au moyen d'un algorithme de classification (4).

2. Procédé selon la revendication 1, **caractérisé en ce que** les coordonnées de l'espace des paramètres (P) sont des paramètres d'une ligne droite.

3. Procédé selon la revendication 1, **caractérisé en ce que** les coordonnées de l'espace des paramètres (P) sont des coordonnées du centre d'un cercle et du rayon d'un cercle.

4. Procédé selon l'une des revendications précédentes, **caractérisé en ce que** la transformation est une transformation de Hough.

5. Procédé selon l'une des revendications précédentes, **caractérisé en ce que** les valeurs de l'accélération transversale (ay) et les valeurs de l'accélération longitudinale (ax) d'au moins une section partielle (T1) de la période de temps (T) sont lissées et/ou filtrées par l'unité de commande (3).

6. Procédé selon l'une des revendications précédentes, **caractérisé en ce que** la valeur de classification (5) et/ou le profil de classification (6) sont transmis à un système d'assistance à la conduite (7) et/ou à un ordinateur central externe (8).

7. Procédé selon l'une des revendications précédentes, **caractérisé en ce que** ladite au moins une section partielle (T1) de la période de temps (T) est déterminée par l'unité de commande (3) en fonction de données géographiques prédéterminées et/ou de valeurs de l'accélération transversale (ay) et/ou de l'accélération longitudinale (ax).

8. Procédé selon l'une des revendications précédentes, **caractérisé en ce que** l'algorithme de classification (4) comprend une machine à vecteurs de support et/ou un réseau de neurones.

9. Unité de commande (3) comportant un dispositif de traitement conçu pour mettre en œuvre l'un des procédés précédents.

10. Véhicule automobile (1) comprenant une unité de commande (3) selon la revendication 9.
